# EUROPEAN PATENT APPLICATION

(11) **EP 2 669 110 A1**
(43) Date of publication of application: **04.12.2013**
(21) Application number: 12170171.8
(22) Date of filing: 31.05.2012
(51) Int. Cl.: B60L 9/22, B60L 5/36

(54) **Mining vehicle**

(71) Applicant: Sandvik Mining and Construction Oy, 33330 Tampere (FI)
(72) Inventor: Eriksson, Harri, 33330 Tampere (FI)
(74) Representative: Smolander, Jouni Juhani

(57) **Abstract**

The invention relates to a mining vehicle and to a method of connecting a mining vehicle. The mining vehicle comprises a carriage, driving equipment for moving the carriage and a DC bus for supplying the driving equipment. The mining vehicle is connected to an external DC trolley line. There is an electrical switching means between the DC bus of the mining vehicle and the external DC trolley line. The electrical switching means is arranged to adapt the polarity of the external DC trolley line to be suitable for the DC bus of the mining vehicle.

## Description

### BACKGROUND OF THE INVENTION

The invention relates to a mining vehicle and to a method of connecting a mining vehicle.

A mining vehicle may be provided with one or more combustion engines, typically diesel engines. However, exhaust gases and noise from a combustion engine cause problems in mines. In addition, a combustion engine requires a lot of space on the carriage of the vehicle, and necessitates regular maintenance. A combustion engine also has adverse effects on fire safety in a mine, since it has hot surfaces and it is also necessary to store and handle flammable fuel in the vehicle and the mine. Furthermore a mining vehicle provided with a combustion engine produces a lot of thermal energy thereby unnecessarily heating the mine.

It is also possible to provide a mining vehicle with electric motors and connect the mining vehicle to an electrical network of the mine. The electrical network of the mine may be an AC electrical network. The electrical network of the mine may also be a DC trolley line. When a DC trolley line is used the mining vehicle comprises a DC bus. When the mining vehicle is connected to a DC trolley line it is important that the polarity of the DC bus is the same as the polarity of the DC trolley line. JP 55097101 discloses a solution where electric equipment is protected from an impression of an inverse voltage on the equipment. Thus wrong polarity does not damage the equipment.

### BRIEF DESCRIPTION OF THE INVENTION

It is an object of the present invention to provide a new type of mining vehicle and method.

The invention is characterized by the features of the independent claims.

According to an embodiment the mining vehicle comprises a carriage, driving equipment for moving the carriage and a DC bus for supplying the driving equipment. The mining vehicle is connected to an external DC trolley line. There is an electrical switching means between the DC bus of the mining vehicle and the external DC trolley line. The electrical switching means is arranged to adapt the polarity of the external DC trolley line to be suitable for the DC bus of the mining vehicle. Thus the mining vehicle may be easily connected to the DC bus regardless of the polarity of the DC trolley line.

In another embodiment the electrical switching means is made such that it enables the supply of energy from the vehicle to the external DC trolley line. In that case in a braking situation, for example, there is no need to supply all the braking energy into brake resistors, for example, but at least some of the braking energy may be supplied to the DC trolley line. Thus there is no need to provide brake resistors of large dimensions. Furthermore supplying energy from the vehicle to the external DC trolley line improves the coefficient of efficiency of the system.

### BRIEF DESCRIPTION OF THE DRAWINGS

Some embodiments of the invention will be described in more detail in the attached drawings, in which
Figure 1 is a schematic side representation of a mining vehicle,
Figure 2 is a diagram of an energy supply arrangement of a mining vehicle,
Figure 3 is a diagram of an electrical switching means between a DC bus of the mining vehicle and an external DC trolley line,
Figure 4 is another embodiment of the electrical switching means between the DC bus of the mining vehicle and the external DC trolley line,
Figure 5 is a third embodiment of the electrical switching means between the DC bus of the mining vehicle and the external DC trolley line and
Figure 6 is a fourth embodiment of the electrical switching mean between the DC bus of the mining vehicle and the external DC trolley line.

In the figures, some embodiments of the invention are shown simplified for the sake of clarity. Similar parts are marked with the same reference numbers in the figures.

### DETAILED DESCRIPTION OF THE INVENTION

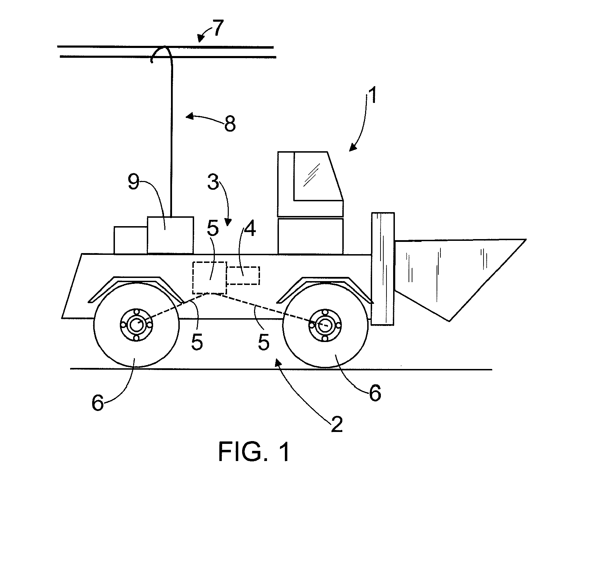

Figure 1 shows one example of a mining vehicle 1. The mining vehicle 1 comprises a carriage 2 that may be moved by means of drive equipment 3. The drive equipment 3 comprises one or more drive motors 4 and one or more power transmission means 5 for transmitting drive power to one or more wheels 6. The drive power transmission may comprise a mechanical gear system and mechanical power transmission members or, alternatively, a hydraulic or electric drive power system may be used.

Figure 1 further shows that the mine has a DC trolley line 7. The mining vehicle 1 may be connected to the DC trolley line 7 with one or more trolley arms 8. The mining vehicle 1 is provided with electrical switching means 9 providing a connection to allow electricity from the external DC trolley line 7 to be supplied to different devices of the mining vehicle 1. The operation and structure of the electrical switching means 9 is discussed in more detail with reference to the figures below.

The mining vehicle 1 may be a dumper, loader, rock drilling rig or any other mining vehicle. The mining vehicle 1 may be equipped with one or more mining work devices which mining work device may be one or more of the following mining work devices: rock drilling machine, bolting machine, shotcreting device, scaling device, injection device, blasthole charger, loading device, bucket, box, measuring device, or drilling, sealing and propellant feeding equipment used in small-charge excavation.

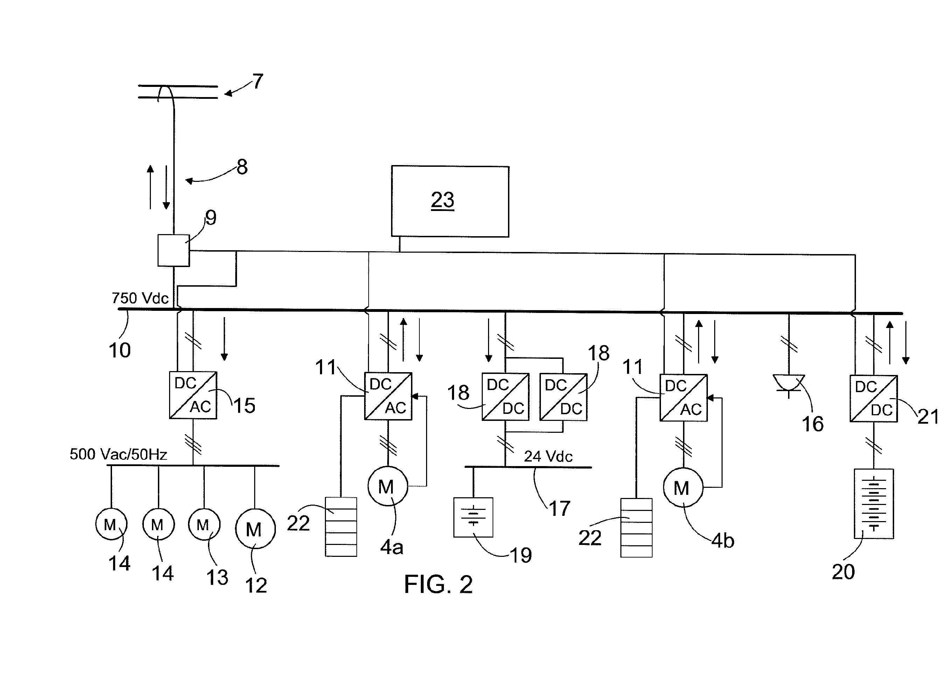

As shown in Figure 2 the mining vehicle is provided with a DC bus 10. In the embodiment shown in Figure 2 the mining vehicle is provided with two drive motors. The drive motor shown with reference numeral 4a is the drive motor for the front wheels. The drive motor shown with reference numeral 4b is the drive motor for the rear wheels. The drive motors 4a and 4b are connected to the DC bus 10 by inverters 11.

The mining vehicle may be provided with a hydraulic pump 12, a motor for air conditioning 13 and one of more cooling pumps 14. The pumps 12 and 14 and the motor 13 are connected to the DC bus 10 by an auxiliary inverter 15.

The mining vehicle 1 may be provided with a service socket or charging socket 16. The mining vehicle 1 may also comprise a low voltage system 17. The low voltage system 17 supplies energy to the control system and to the lights etc. The low voltage system 17 is connected to the DC bus 10 by one or more DC/DC converters 18. Energy may be supplied to the low voltage system 17 also by a battery 19.

The mining vehicle 1 may also comprise a traction battery 20. The traction battery 20 is connected to the DC bus 10 by a DC/DC converter 21. If for some reason energy cannot be supplied from the external trolley line 7 to the mining vehicle it is then possible to supply energy from the traction battery 20 to move the mining vehicle 1.

Each of the drive motors 4a, 4b are provided with brake resistors 22. During downhill movement and/or braking the drive motors 4a, 4b generate electrical energy. This generated electrical energy may be supplied to the brake resistors 22 and/or back to the trolley line.

The operation of the mining vehicle 1 is controlled by a control system 23.

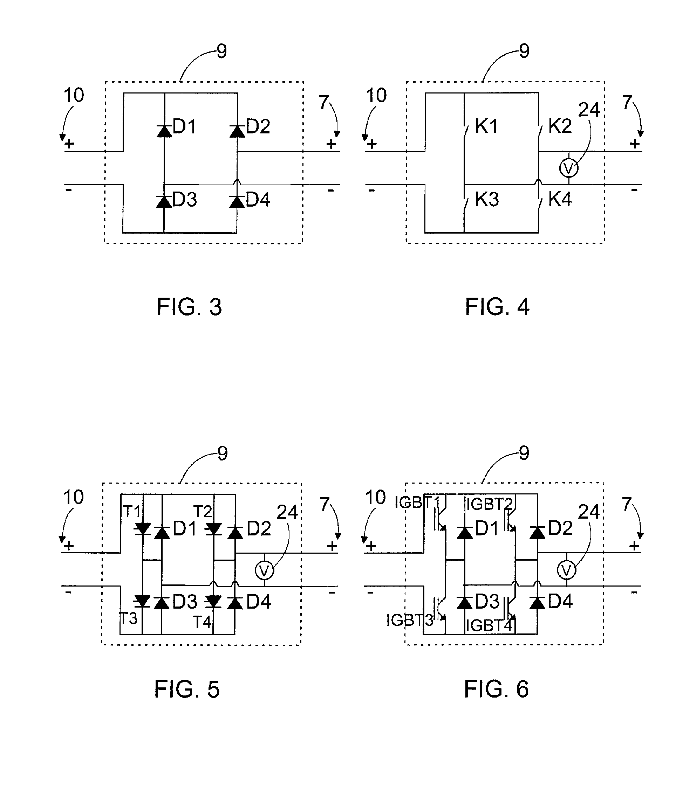

Figure 3 shows an example of the electrical switching means 9. The electrical switching means 9 comprise a diode bridge formed by diodes D1,D2, D3 and D4.

Energy from the external DC trolley line 7 is supplied to the DC bus 10 of the mining vehicle through the diode bridge. When the polarities are as shown in Figure 3 the diodes D2 and D3 allow current to pass through them. If, however, the mining vehicle is connected to the trolley line such that the polarity is opposite to that shown in Figure 3, diodes D1 and D4 allow current to pass through them.. Thus in both cases the diode bridge adapts the polarity of the external DC trolley line 7 to be correct for the DC bus 10 of the mining vehicle. Therefore the need to check the polarity of the trolley line before connecting the mining vehicle to the trolley line may be avoided.

Hence in both cases regarding polarity, the equipment in the mining vehicle is not damaged and energy is supplied to the mining vehicle.

In the embodiment shown in Figure 4 the electrical switching means 9 is provided with means for determining the polarity of the external DC trolley line 7. The means for determining the polarity of the external DC trolley line may be a voltmeter 24, for example. The electrical switching means 9 also comprises contactors K1, K2, K3 and K4. The contactors K1, K2, K3 and K4 are controlled by the control system 23. If the polarity of the trolley line 7 is determined to be as shown in Figure 4 then the control system 23 controls the contactors such that contactors K2 and K3 are turned on and contactors K1 and K4 are turned off. If the polarity of the trolley line 7 is determined to be opposite to that shown in Figure 4 then contactors K1 and K4 are turned on and contactors K2 and K3 are turned off.

In the case shown in Figure 3 as well as in the case shown in Figure 4 the equipment in the mining vehicle is protected. Further, the electrical switching means 9 shown in Figure 4 provide the feature that energy from the mining vehicle 1 can be supplied to the external DC trolley line 7. The need to supply energy from the mining vehicle 1 to the trolley line 7 arises for example from a situation where the drive motors 4a, 4b generate energy during braking and /or downhill driving, for example. In that case it is not necessary to supply all the generated energy to the brake resistors 22 but the energy may be supplied to the trolley line 7. Therefore in that case the brake resistors 22 need not be dimensioned to be large. Furthermore supplying energy from the mining vehicle 1 to the external DC trolley line 7 improves the coefficient of efficiency of the system.

In the embodiment shown in Figure 5 the electrical switching means 9 is provided with the diode bridge as shown in Figure 3. The electrical switching means 9 further comprises thyristors T1, T2, T3 and T4 connected antiparallel with the diodes D1, D2, D3 and D4 of the diode bridge. Energy from the DC trolley line 7 is supplied to the DC bus 10 through the diode bridge and therefore the polarity in the DC bus of the vehicle is always correct. During regenerative braking, energy may be supplied back to the DC trolley line 7 when the voltage of the DC bus 10 rises above a limit value. Thus, the polarity of the DC trolley line 7 is determined and if the polarity is as shown in Figure 5 thyristors T2 and T3 are turned on and thyristors T1 and T4 are turned off. If the polarity is opposite the thyristors T1 and T4 are turned on and thyristors T2 and T3 are turned off. By using thyristors T1, T2, T3 and T4 instead of contactors K1-K4 a faster control is achieved and a lower current is needed for controlling the electrical switching means. Although a thyristor is more expensive than a contactor, the price is still reasonable.

Figure 6 shows an embodiment where the structure of the electrical switching means 9 corresponds to that of Figure 5 with the exception that instead of thyristors T1-T4 transistor switches are used. The transistor switches may be IGBTs (Insulated Gate Bipolar Transistor), for example. The operation of the electrical switching means 9 shown in Figure 6 corresponds to that in Figure 5. Thus, if the polarity of the trolley line 7 is as shown in Figure 6, IGBT2 and IGBT3 are turned on and IGBT1 and IGBT4 are turned off. If the polarity is opposite to that shown in Figure 6, IGBT1 and IGBT4 are turned on and IGBT2 and IGBT3 are turned off. Also this embodiment provides the feature that the energy from the trolley line 7 is supplied through the diode bridge D1-D4 to the DC bus 10 whereby the polarity is always correct. Here, too, energy may be supplied back to the trolley line 7 during regenerative braking when the voltage of the DC bus 10 rises above a limit value. Transistor switches are even faster than thyristors and in addition, they are smaller in size than thyristors.

It will be obvious to a person skilled in the art that, as the technology advances, the inventive concept can be implemented in various ways. The invention and its embodiments are not limited to the examples described above but may vary within the scope of the claims.

## Claims

1. A mining vehicle, comprising
a carriage,
driving equipment for moving the carriage,
a DC bus for supplying the driving equipment,
means for connecting the DC bus of the mining vehicle to an external DC trolley line, and
an electrical switching means between the DC bus and the external DC trolley line arranged to adapt the polarity of the external DC trolley line to be suitable for the DC bus of the mining vehicle.

2. A mining vehicle as claimed in claim 1, wherein the electrical switching means comprises means enabling the supply of energy from the vehicle to the external DC trolley line.

3. A mining vehicle as claimed in claim 2, wherein the electrical switching means comprises a volt meter arranged to determine the polarity of the external DC trolley line and contactors arranged to be controlled on the basis of the determined polarity of the external DC trolley line.

4. A mining vehicle as claimed in claim 2, wherein the electrical switching means comprises a diode bridge adapting the polarity of the external DC trolley line to be suitable for the DC bus of the mining vehicle and thyristors connected antiparallel with the diodes of the diode bridge for enabling the supply of energy from the vehicle to the external DC trolley line.

5. A mining vehicle as claimed in claim 2, wherein the electrical switching means comprises a diode bridge adapting the polarity of the external DC trolley line to be suitable for the DC bus of the mining vehicle and transistor switches connected antiparallel with the diodes of the diode bridge for enabling the supply of energy from the vehicle to the external DC trolley line.

6. A mining vehicle as claimed in claim 5, wherein the transistor switch is an IGBT.

7. A method of connecting a mining vehicle, the mining vehicle comprising
a carriage,
driving equipment for moving the carriage and
a DC bus for supplying the driving equipment,
the method comprising
connecting the DC bus of the mining vehicle to an external DC trolley line, and
adapting the polarity of the external DC trolley line to be suitable for the DC bus of the mining vehicle by an electrical switching means between the DC bus and the external DC trolley line.

8. A method as claimed in claim 7, comprising supplying energy from the vehicle to the external DC trolley line through said electrical switching means.

9. A method as claimed in claim 8, wherein the electrical switching means comprises a voltmeter and contactors, the method comprising determining the polarity of the external DC trolley line by the voltmeter and controlling the contactors on the basis of the determined polarity of the external DC trolley line.

10. A method as claimed in claim 8, comprising adapting the polarity of the external DC trolley line to be suitable for the DC bus of the mining vehicle by a diode bridge and supplying energy from the vehicle to the external DC trolley line through thyristors connected antiparallel with the diodes of the diode bridge.

11. A method as claimed in claim 8, comprising adapting the polarity of the external DC trolley line to be suitable for the DC bus of the mining vehicle by a diode bridge and supplying energy from the vehicle to the external DC trolley line through transistor switches connected antiparallel with the diodes of the diode bridge.
